# EUROPEAN PATENT APPLICATION

(11) **EP 1 553 066 A1**
(43) Date of publication of application: **13.07.2005**
(21) Application number: 03748530.7
(22) Date of filing: 12.09.2003
(51) Int. Cl.: C04B 35/565

(54) **ORIENTED SILICON CARBIDE SINTERED COMPACT AND METHOD FOR PREPARATION THEREOF**

(30) Priority: 13.09.2002 JP 2002267824
(71) Applicant: National Institute for Materials Science, Tsukuba-shi, Ibaraki 305-0047 (JP)
(72) Inventor: SUZUKI, Tohru, Tsukuba-shi, Ibaraki 305-0047 (JP); SAKKA, Yoshio, Tsukuba-shi, Ibaraki 305-0047 (JP)
(74) Representative: Calamita, Roberto
(86) International application number: PCT/JP2003/011712
(87) International publication number: WO 2004/024650

(57) **Abstract**

A novel oriented sintered silicon carbide product, wherein α silicon carbide is orientated in an arbitrary direction and crystal orientation is controlled to an arbitrary direction; and method for preparing the oriented sintered silicon carbide product which comprises mixing α silicon carbide particles with a solvent to form an α silicon carbide slurry, solidifying the slurry, molding the resultant solid, followed by sintering, wherein the solidification and molding are carried out in a magnetic field of 1T or higher.

## Description

### Technical Field

The present invention relates to an oriented sintered silicon carbide product and a method for preparation thereof. More specifically, the present invention relates to a novel oriented sintered silicon carbide product having a texture with the crystal orientation controlled, and a method for preparation thereof.

### Background Art

A silicon carbide is a material having a high heat conductivity and a heat resistance, and furthermore, the strength, the hardness and the wear resistance so that it is used widely for a refractory, a polishing material, a metallurgy material, or the like. For example, it is used also for the special applications such as a covering material for a nuclear reactor particle fuel, and a lining material for a refuse incinerator.

Then, since it endures the chemical corrosion such as oxidization compared with the metals and the other non oxide based ceramics, it is used also in various kinds of crucibles, parts for baking in a furnace, a mechanical seal, a heat exchanging device heat transmitting tube, or the like as a high-temperature structural material.

Moreover, in terms of the electro magnetic characteristics, it is used as a heating element, and furthermore, its utilization as a semiconductor at a high temperature calls the attention owing to the large band gap so that the study and development thereof is promoted.

Concerning the silicon carbide utilized in the various fields, recently, the electric insulation property of a sintered silicon carbide with a beryllia addition has been found out so that a silicon carbide having both the high heat conductivity known conventionally and the electric insulation property can be obtained. This beryllia-containing silicon carbide with both the high heat conductivity and insulation has a thermal expansion coefficient which is close to that of the silicon, so that a silicon semiconductor chip can be mounted directly on this silicon carbide, it has already used as a heat discharging substrate for an LSI and a laser diode, which is required to have the electric discharging property and the electric insulation property at the same time.

On the other hand, with regard to the ceramics including the silicon carbide, in general, we can improve the properties such as the toughness and the strength by controlling the microstructure thereof. Research and developments have actively been conducted for providing the anisotropy to the properties or improving the properties by the crystalline orientation of the ceramics to a certain direction.
For example, as to the silicon carbide, obtainment of a silicon carbide with the orientation properties and the excellent strength and toughness by the zone sintering at the time of synthesizing the silicon carbide using the reaction sintering is disclosed in the official gazette of the Japanese Patent Application Laid-Open (JP-A) No. 9-175870. However, according to this method, since the free Si is included, a problem is involved in that the high temperature strength of the silicon carbide to be obtained is lowered. Moreover, a method of producing a silicon carbide material having an oriented rod-like texture by orienting the rod-like particle in a green compact to one direction by molding a kneaded product comprising silicon carbide powders, a sintering aid and silicon carbide rod-like particles by a molding method of applying the sharing force such as extrusion molding and a tape casting, and furthermore, by orienting by the grain growth of the rod-like particles as the seed crystals at the time of sintering is disclosed in the official gazette of JP-A No. 11-79845. However, according to the method, the shape of the silicon carbide to be obtained is limited due to the molding method of applying the shearing force to the kneaded product so that it is disadvantageous in that the orientation direction cannot be set optionally. Furthermore, Michael D. Sacks, et al. reports the obtainment of an oriented silicon carbide by sintering the green compact prepared by cast molding of a silicon carbide slurry including a plate-like silicon carbide in J. Am. Ceram. Soc., 79[6] 1611 (1996). However, also according to this method, since the silicon carbide is oriented only in the specific direction of the cast molding direction, a problem still remains in that the orientation direction is limited. Moreover, the orientation control using only the spherical particles cannot be executed by the conventional methods.

Accordingly, the present invention has been achieved in view of the above-mentioned circumstances, and an object thereof is to provide a novel oriented sintered silicon carbide product having a texture with the crystal orientation controlled, capable of solving the above-mentioned problems in the conventional techniques, and a method for preparation thereof.

### Disclosure of the Invention

Accordingly, the present invention has been achieved in view of the above-mentioned circumstances. It solves the problems of the conventional technique and provides the following inventions.

That is, firstly, the present invention provides an oriented sintered silicon carbide product characterized in being a sintered compact of an α silicon carbide with the orientation control.

Then, secondly, the present invention provides the above-mentioned oriented sintered silicon carbide product characterized in being a sintered compact of an α silicon carbide with the orientation controlled by the application of a magnetic field.

Moreover, the present invention thirdly provides a method for preparing an oriented sintered silicon carbide product characterized in preparing an α silicon carbide slurry by mixing α silicon carbide particles and a solvent, solidifying and molding the slurry in a magnetic filed of 1T or higher, and sintering. Fourthly, it provides the method for preparing an oriented sintered silicon carbide product characterized in that the shape of the α silicon carbide particles is spherical.

The present inventors have already found out that the crystal orientation can be made by the application of the strong magnetic field at the time of producing oxide based non ferromagnetic ceramics such as an alumina, a titania and a zinc oxide (Patent Application No. 2001-144049). Then, according to the invention, attention has been paid to the α-silicon carbide, of which magnetic anisotropy has conventionally been dealt with as negligible due to its extremely small magnetic susceptibility so as to find out that the orientation control of the silicon carbide by the strong magnetic field can be made without the limitation to an oxide based non ferromagnetic material, which has led to the present invention.

According to the conventional knowledge that there are an extremely large number of polymorphisms (2H, 4H, 6H, 15R, or the like) for the same α silicon carbides in a state not simple but with a plurality of polymorphisms present in a mixed manner in many cases so as to be modified during a sintering operation so that the orientation control can hardly been made, the present invention has not at all been imaginable or predictable.

### Brief Description of the Drawings

Fig. 1 shows a schematic illustration of the direction of both the slip casting and the applied magnetic field in an example.
Fig. 2 shows the X-ray diffraction profiles of an oriented sintered silicon carbide product prepared by the example.
Figures 3 show a schematic illustration of the direction of both the slip casting and the applied magnetic field and the X-ray diffraction profile of an oriented sintered silicon carbide product prepared by the comparative example.

### Best Mode for Carrying Out the Invention

The present invention has the above-mentioned characteristics. Hereafter, embodiments thereof will be explained in detail.

First, a method for preparing an oriented sintered silicon carbide product provided by the present invention is characterized in preparing an α silicon carbide slurry by mixing α silicon carbide particles and a solvent, solidifying and molding the slurry in a magnetic filed of 1T or higher, and sintering.

The a silicon carbide as the material having a hexagonal system crystal structure in material having an extremely small magnetic anisotropy. It is preferable to use particles having about 1 mm or less size, as the a silicon carbide. Although it is possible to use a flat plate like one as the α silicon carbide, since it is not necessary to use the plate like crystal as the seed for the grain growth according to the present invention. Moreover, in the case of obtaining a silicon carbide with fine microstructure comprising equiaxial grains, it is preferable to use spherical particles. Of course, "spherical" here does not denote spherical in a strict sense, but it denotes those which can be regarded as spherical as a whole compared with plate like ones. It may be slightly angular microscopically.

As a solvent, a water or an alcohol such as non water based ethanol, an organic solvent such as an ether, a solvent mixture thereof, or the like can be used.

By mixing the above-mentioned α silicon carbide particle and solvent, a slurry is prepared. The slurry concentration and the electrolyte concentration can be determined in consideration of the particle size of the α silicon carbide, the kind of the solvent, the molding method in the next process, or the like. Moreover, various kinds of sintering aids, or the like can be added to the slurry. As to the slurry pH in this case, pH 9 or higher can be considered as the general standard. For example, for a water based slurry, it is in a range of about pH 9 to 12.

Next, the slurry is solidified and molded in a magnetic field. An intensity of a certain degree is required to the magnetic field for orienting an α silicon carbide having a small magnetic anisotropy. An strong magnetic field can be obtained relatively easily without using a liquid helium owing to the recent development of a superconductive magnet. Even in the case of a non magnetic material, the magnetic field can be applied as an unnegligible energy applied from the outside. As the standard of such a magnetic field, it is 1T or higher and it is more preferably 5T or higher, such as about 10T. Moreover, as to the magnetic field applying direction, an optional direction can be selected. Without being limited by the direction or shape of molding, an orientation corresponding to the application of a magnetic field can be adopted.

Furthermore, for molding, various kinds of methods can be utilized. For example, colloid process such as slip casting, gel casting, pressure filtration, tape casting, and electrophoresis deposition, or the like can be presented as the preferable methods.

Then, by sintering the obtained compact, an oriented silicon carbide can be obtained. For the sintering operation, various sintering methods and sintering conditions can be considered according to the shape, the microstructure, or the like of the desired oriented silicon carbide to be obtained. A sintering aid can be used as well. For example, as to the sintering conditions, although it differs depending on the sintering aid, the temperature range of 1,800 to 2,300°C in an inert gas atmosphere for about 1 to 3 hour duration can be presented as an example. According to the sintering operation, the densification of the microstructure and the orientation can be promoted in the grain growth process.

An oriented silicon carbide of the present invention obtained accordingly has the α silicon carbide having the orientation control in an optional direction, with the strength and the toughness improved at the same time, and furthermore, the heat conductivity improved dramatically. Moreover, since the oriented silicon carbide having fine microstructure comprising equiaxial grains can be provided, the strength and the toughness can further be improved so that the orientation dependency of these properties can be reduced. Furthermore, since the grain growth in a specific direction is restrained, the stable properties can be obtained even at a high temperature.

Hereinafter, examples will be presented with reference to the accompanied drawings for explaining the embodiments of the present invention in further details.

### Example

### (Example)

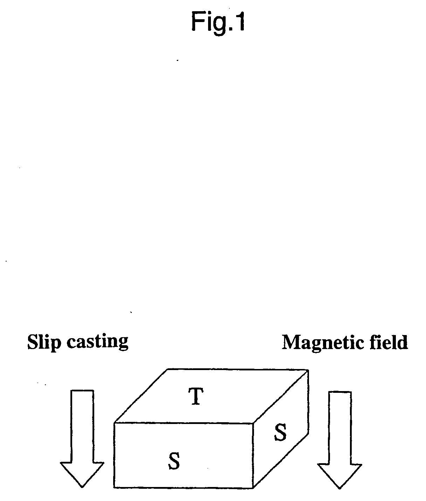

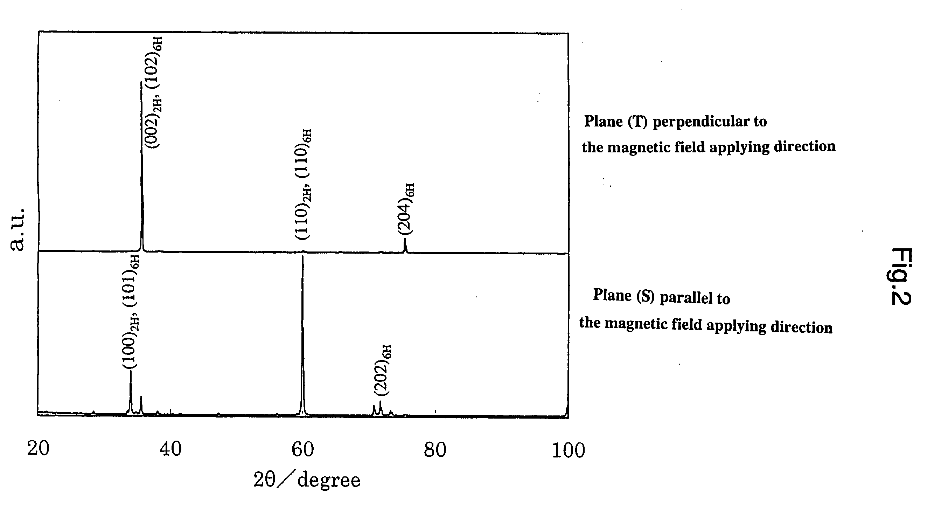

A slurry was produced by mixing 4.3 weight part of an alumina having a 0.5 µm average particle size as a sintering aid in 100 weight part of α-silicon carbide powders having a 0.5 µm average particle size, and dispersing the same in an aqueous solution measured so as to have a 30 vol% solid phase concentration, and adjusted to pH 10. In order to disperse the particles weakly aggregated at the time, ultrasonic agitation was carried out while dispersing with a stirrer. An operation of pouring the slurry into a porous mold for absorbing the solution for the high density molding (slip casting) was executed in a magnetic field of 10T. As shown in FIG.1, the direction of the applied magnetic field was parallel to the casting direction. By heating the compact at 1,950°C for 2 hours in an argon atmosphere, an oriented sintered silicon carbide product was obtained. FIG 2 shows the results of the X ray diffraction measurement of the obtained oriented sintered silicon carbide product.

From FIG 2, it was confirmed that an oriented sintered silicon carbide product with the 2H (200) plane and the 6H (102) plane oriented neatly to the plane (T) perpendicular to the magnetic field applying direction and the (100) plane to the parallel plane (S) was obtained.

### (Comparative example)

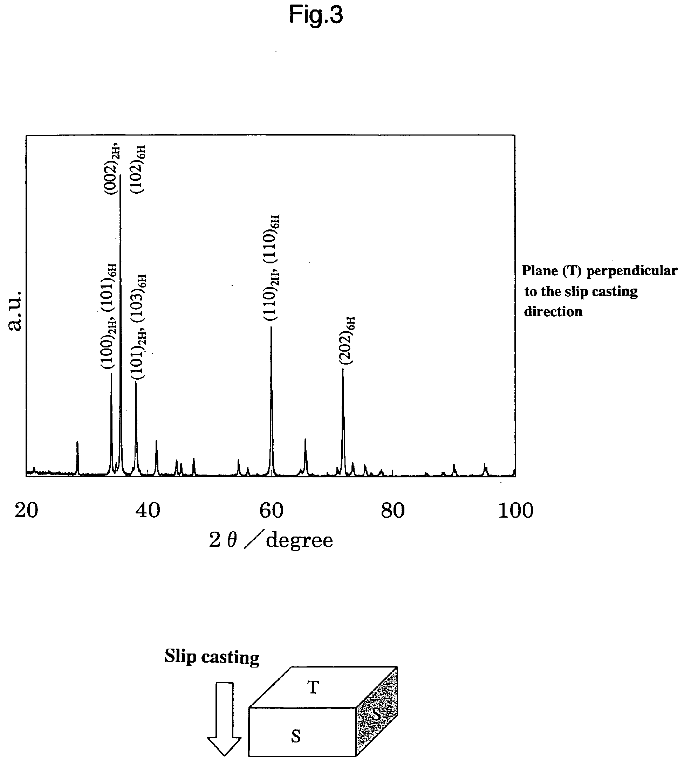

A compact was produced by slip casting of a slurry obtained in the same manner as in the example without applying the magnetic field. A sintered silicon carbide product was obtained by heating the compact at 1,950°C for 2 hours in an argon atmosphere. FIG 3 shows the results of the X ray diffraction measurement of the obtained oriented sintered silicon carbide product.

From FIG 3, it was confirmed that the similar diffraction lines were observed both in the plane (T) perpendicular to the magnetic field applying direction and the plane (S) parallel thereto so that the silicon carbide was not oriented in the obtained sintered compact.

Or course the present invention is not limited to the examples mentioned above, and it is needless to say that various embodiments can be provided in the details.

### Industrial Applicability

As heretofore explained in detail, according to the present invention, a novel oriented sintered silicon carbide product with the crystal orientation in an optional direction, having a minute texture comprising isometric grains, and a production method therefor are provided.

## Claims

1. An oriented sintered silicon carbide product **characterized in** being a sintered compact of an α silicon carbide with the orientation control.

2. The oriented sintered silicon carbide product according to claim 1, **characterized in** being a sintered compact of an α silicon carbide with the orientation controlled by the application of a magnetic field.

3. A method for preparing an oriented sintered silicon carbide product which comprises preparing an α silicon carbide slurry by mixing α silicon carbide particles and a solvent, solidifying and molding the slurry in a magnetic filed of 1T or higher, and sintering.

4. The method for preparing an oriented sintered silicon carbide product according to claim 3, wherein the shape of the α silicon carbide particles is spherical.
